# FASCICULE DE BREVET EUROPEEN

(11) **EP 1 804 545 B1**
(45) Date de publication et mention de la délivrance du brevet: **13.02.2013**
(21) Numéro de dépôt: 06125407.4
(22) Date de dépôt: 05.12.2006
(51) Int. Cl.: H04W 8/18, H04W 48/18

(54) **Traitement d'une demande d'un utilisateur d'un terminal en fonction d'un profil**
Handlung eines Anfrage eines Terminal Benutzer Mittels eine Profil
Processing of the request of a user of a terminal based on a profile

(30) Priorité: 27.12.2005 FR 0554098
(43) Date de publication de la demande: 04.07.2007
(73) Titulaire: Société Française du Radiotéléphone-SFR, 75008 Paris (FR)
(72) Inventeur: Simoni, Noëmie, 91600, Savigny sur Orge (FR); Coude, Philippe, 91360, Epinay sur Orge (FR); Boutignon, Antoine, 75005, Paris (FR); De Moissac, Arnaud, 75017, Paris (FR)
(74) Mandataire: Schmit, Christian Norbert Marie

(56) Documents cités:
- EP-A- 1 241 838
- WO-A-01/35687
- US-A1- 2002 039 892
- US-A1- 2004 198 360

## Description

L'invention a pour objet un procédé de traitement d'une demande d'un utilisateur d'un terminal numérique. Le domaine de l'invention est celui des réseaux et plus particulièrement celui des réseaux de télécommunication accessibles depuis des terminaux mobiles. Un terminal mobile (any time, any where) est, d'une manière générale, un terminal transportable dans une poche d'un vêtement et apte à se connecter à un réseau de télécommunication , par exemple d'un opérateur de téléphonie mobile.

Dans l'état de la technique il existe différentes technologies d'accès qui permettent potentiellement à un utilisateur de choisir la technologie la plus adaptée à son besoin. Cependant la coexistence de technologies hétérogènes rend l'environnement d'exécution d'un service sur un terminal donné, via ces technologies, extrêmement complexe. L'exécution optimale, ou tout du moins adéquate dépend alors de différents facteurs parmi lesquels la localisation de l'utilisateur (spatiale et temporelle), l'environnement réseau, le contexte d'exécution, les capacités du terminal de l'utilisateur, etc.

Avec la convergence des télécommunications classiques et du monde moderne de l'Internet, une nouvelle génération de services est apparue. Ces nouveaux services (services multimédia, services de données, services Internet) peuvent être utilisés différemment par les utilisateurs selon leurs préférences et/ou selon leurs capacités. Par conséquent, dans cette nouvelle configuration, le facteur humain devient le plus important dans la conception et la réalisation d'un service. Les utilisateurs devraient pouvoir définir leurs préférences et personnaliser leurs services. La personnalisation et les préférences varient selon différents facteurs statiques et dynamiques. La personnalisation est une des clés de la viabilité d'un service. Les données de personnalisation devraient pouvoir être stockées et exploitées de manière interopérable et dynamique pour chaque acteur. Cela n'est pas le cas dans l'état de la technique.

Il est à noter que les systèmes de télécommunications actuels sont limités en termes de portabilité de services et de déploiement rapide de services.

Pour répondre à ce dernier point quelques initiatives ont vu le jour pour ouvrir les réseaux et les rendre accessibles à des fournisseurs de services tiers. Ces initiatives sont, par exemple, la méthode OSA (Open Service Access, pour accès ouvert au service) dont les spécifications sont livrées par le 3GPP sous la référence 22.127 et en particulier la version 5.3.0 de ce document. Une autre initiative est connue sous le nom de JAIN (Interface de programme d'accès au réseau pour JAVA). Ces initiatives sont regroupées sous les appellations EAI (Enterprise Application Integration, pour intégration d'application d'entreprise) et Web Services pour services web.

Pour le cas des services web, des EAls, tous les composants d'un système sont des services qui formatent des comportements/données et communiquent avec d'autres composants à travers une interface d'une application de communication à laquelle lesdits composants accèdent via des fonctions standardisées. De telles fonctions sont appelées des APls (Application Program Interface, pour interface de programmes d'application). Les protocoles utilisés pour ces communications sont, par exemple, SOAP (Simple Object Access Protocol, pour protocole simple d'accès à un objet) et ou WSDL (Web Services Description Language, pour langage de description d'un service web).

Ces technologies, dans leurs spécificités, illustrent le fait que la préoccupation principale de ces systèmes est de multiplier le nombre d'interfaces pour accroître l'interopérabilité entre les applications. En d'autres termes l'objectif de ces systèmes est de rendre l'accès aux données transparent pour les applications. Dans cette approche la gestion de la qualité de service n'est pas faite, et encore moins la gestion de la qualité de service entre un utilisateur et le service demandé par l'utilisateur, ce que l'on appellera ici la qualité de service d'extrémité à extrémité ou de bout en bout.

Un autre problème de l'état de la technique est sa nature centralisée et sa mise en place sous une forme client serveur qui impose une infrastructure de gestion des serveurs eux-mêmes via d'autres serveurs. Cela crée, entre le client et le serveur une chaîne dont chaque maillon est susceptible de tomber en panne.

Chaque maillon est capital dans la relation client serveur. Cela a pour conséquence une possible dégradation des performances générales. Ces inconvénients sont dus à la multiplicité des équipements traversés lors des communications entre le serveur et le client.

D1 US2002/0039892 A1 décrit la sélection d'un réseau d'accès en fonction de la qualité des liens radio vers le réseau d'accès et en fonction du type de service requis. Ces paramètres sont mis à jour en continu et vont être pris en compte pour déterminer quel réseau d'accès est utilisé.

D2 WO01/35687 A1 décrit un système dans lequel le mode dans lequel un terminal se trouve est décidé en fonction de mesures concernant l'environnement du terminal et en fonction du profil de l'utilisateur.

Ces problèmes peuvent être adressés par la mise en place d'un logiciel de couche intermédiaire aussi appelé un "middleware". Ce logiciel de couche intermédiaire procède d'une part à une mise à jour continue de «l'infosphère» de l'utilisateur et d'autre part à un filtrage des informations collectées qui sont associées à des préférences exprimées par l'utilisateur du dispositif. On appelle ici infosphère de l'utilisateur l'ensemble de toutes les données relatives à l'utilisateur et des moyens d'utiliser ces données. De cette association il résulte un profil actif qui est utilisé pour produire des réponses à des requêtes exprimées par l'utilisateur précédemment mentionné. Les préférences de l'utilisateur intègrent des données personnelles, aussi bien que des données de type présentation, qualité de service et/ou moyens à mettre en oeuvre pour satisfaire une requête exprimée par ledit utilisateur.

Une troisième étape du procédé permet de calculer toutes les possibilités de mise en oeuvre en fonction des contraintes de chaque élément de la chaîne, en anticipant les pannes éventuelles afin de répondre à la demande de l'utilisateur.

L'invention a donc pour objet un procédé de traitement d'une demande d'un utilisateur d'un terminal mobile par ledit terminal mobile tel que décrit dans la revendication 1.

Avantageusement l'invention est aussi caractérisée en ce que la collecte des données et la production du profil sont réalisées en permanence pour tenir compte de l'évolution de l'environnement du terminal.

Avantageusement l'invention est aussi caractérisée en ce que la production du profil est réalisée selon un agenda.

Avantageusement l'invention est aussi caractérisée en ce que une information de qualité de service est associé dynamiquement à chaque élément du profil de nature ressource de traitement et ressource de communication.

Avantageusement l'invention est aussi caractérisée en ce que le réseau utilisateur privé d'éléments, permettant la satisfaction de la demande, est construit en fonction d'une qualité minimale à atteindre pour la satisfaction de la demande.

Avantageusement l'invention est aussi caractérisée en ce que la défaillance d'un élément dans le réseau utilisateur privé construit pour la satisfaction de la demande entraîne la substitution de cet élément par un autre élément équivalent dans le profil.

Avantageusement l'invention est aussi caractérisée en ce qu'une tâche de production du profil maintient, quand c'est possible et ce pour chaque élément du profil, une liste d'éléments équivalents.

Avantageusement l'invention est aussi caractérisée en ce qu'une demande, pour être confrontée aux ressources disponibles, est décomposée en une séquence de ressources à mettre en oeuvre pour satisfaire la demande.

L'invention sera mieux comprise à la lecture de la description qui suit et à l'examen des figures qui l'accompagnent. Celles-ci sont présentées à titre indicatif et nullement limitatif de l'invention. Les figures montrent:
- figure 1: une illustration d'étapes du procédé selon l'invention;
- figure 2: une illustration de l'évolution d'un profil actif au cours du temps,
- figure 3: une illustration d'un réseau comportant une pluralité de terminaux et serveurs,
- figure 4: une illustration d'étapes de l'abonnement à un service,
- figure 5: une illustration générique du traitement d'une demande.

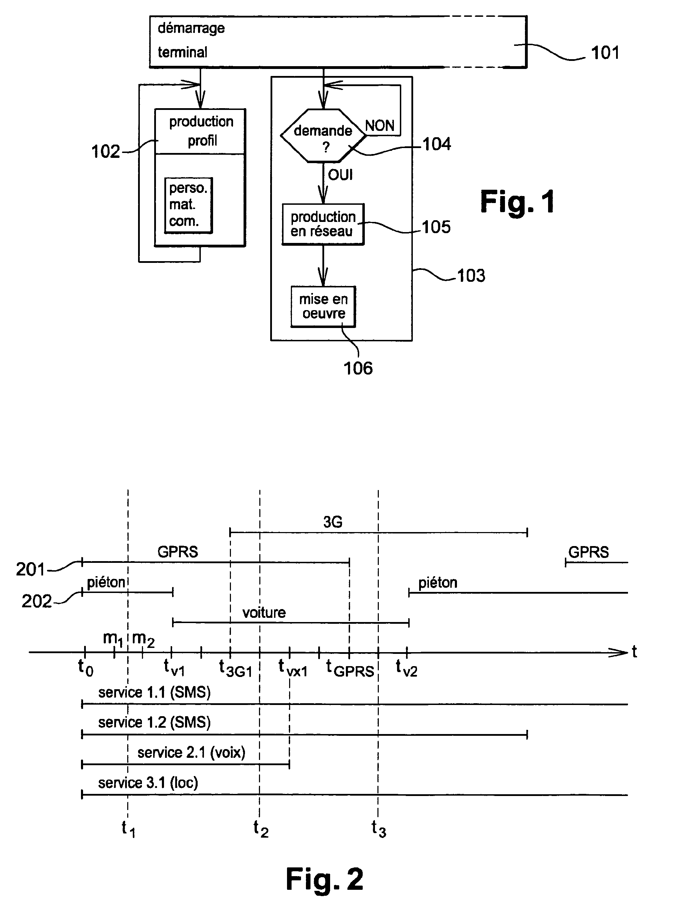

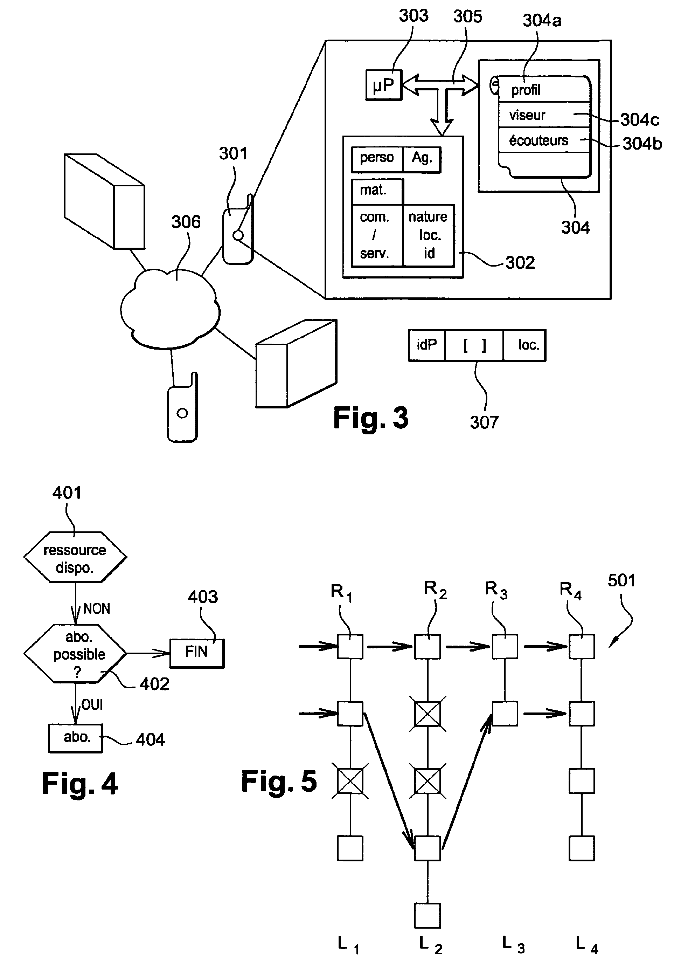

La figure 1 montre une étape 101 préliminaire de démarrage d'un terminal, par exemple le terminal 301 montré par la figure 3. Le terminal 301 est, par exemple, un appareil de téléphonie mobile. Dans la pratique un tel terminal peut être n'importe quel dispositif apte à se connecter à un réseau de télécommunication. En particulier un tel dispositif peut être un assistant personnel ou un ordinateur personnel. Le terminal 301 est connecté, via un réseau 306 à d'autres terminaux et / ou serveurs.

Lors de son démarrage 101 le terminal 301 lance une séquence d'initialisation ou "boot" classique puis, selon l'invention, lance au moins un processus 102 de production d'un profil. Le processus 102 collecte et enregistre des informations en vue d'une utilisation ultérieure pour satisfaire une requête d'un utilisateur du terminal 301.

Une particularité de l'invention est que ce processus de production d'un profil est permanent une fois le terminal démarré. Par permanent il faut ici comprendre que soit le terminal exécute le processus 102 dans un environnement multitâche, la tâche correspondant au processus ne s'arrêtant alors jamais, soit le processus 102 est lancé à intervalles réguliers. On note ici que le processus 102 peut être lancé à intervalles réguliers dans un environnement multitâche.

Dans une mise en oeuvre de l'invention, la production du profil est réalisée par deux processus simultanés. Un premier processus dit d'ambiance qui collecte en permanence les informations relatives à l'utilisateur créant ainsi son infoshpère. Un processus de filtrage qui produit un profil actif qui correspond aux informations de l'infosphère filtrées et / ou triées par les préférences de l'utilisateur. Il faut bien ici comprendre ce qu'est l'infosphère de l'utilisateur. Il s'agit en fait de toutes les informations que le terminal 301 est capable de collecter sur son utilisateur. Ces informations concernent donc des données de type identifiant, mot de passe, préférences, personnalisations, mais aussi les capacités de l'appareil utilisé par l'utilisateur ainsi que des appareils auxquels ledit appareil utilisé par l'utilisateur est capable de se connecter. Ces capacités s'expriment en terme d'aptitude de restitution sonore, d'aptitude de restitution graphique, de capacité de traitement, de capacité d'émission réception, ... la liste n'étant pas exhaustive.

La figure 1 montre que le traitement des informations par le processus 102 porte sur des informations :
- personnelles, comme le nom, l'adresse, des identifiants électroniques par exemple de type messagerie électronique et ou instantanée, des préférences dans le mode de réalisation d'un service, etc.,
- matérielles comme la puissance du microprocesseur du terminal, les capacités d'affichages du terminal, les capacités de rendu sonore du terminal, etc.,
- de communications et plus généralement de services que le terminal est apte à mettre en oeuvre. Parmi les ressources de communication on connaît au moins les différents réseaux des opérateurs de téléphonie mobile, les moyens de connexion locaux tels que les réseaux locaux sans fil (de type Wifi, Bluetooth ou DECT) et filaires (de type Ethernet).

Ces informations une fois collectées sont enregistrées dans une mémoire 302 de profil du terminal 301. La mémoire 302 est elle-même divisée en deux zones, une zone pour enregistrer l'infosphère et une zone pour enregistrer le profil dit actif qui est le filtrage de l'infosphère par les préférences de l'utilisateur. Dans une variante préférée, le profil actif dépend de la localisation de l'utilisateur. Cette localisation est aussi bien spatiale que temporelle. Cela est réalisé grâce à un agenda qui permet de dater l'application des préférences. Cela est aussi réalisé par l'association de chaque préférence à une localisation de type, voiture, France, nom de ville, etc.. La figure 3 montre une entrée 307 d'un agenda selon l'invention. Une telle entrée 307 comporte au moins un champ idP identifiant la préférence, par exemple un réseau de télécommunication ou un service, un champ [] spécifiant une fenêtre temporelle, et un champ loc. spécifiant une localisation.

Dans une variante de l'invention le profil de l'utilisateur n'est pas enregistré dans le terminal lui-même, mais dans une mémoire accessible au terminal via une connexion réseau par exemple. Cela revient à enregistrer le profil de l'utilisateur sur un serveur de profil. Dans cet optique le profil lui-même devient une ressource dont il faut prendre en compte la disponibilité pour la satisfaction d'une requête. Ce mode de réalisation permet la mise en oeuvre de l'invention sur des terminaux de faibles capacités mémoire et/ou de traitement.

Cette variante peut encore être déclinée en enregistrant le profil de l'utilisateur pour une partie sur le terminal et pour la partie complémentaire sur un serveur. La partie enregistrée sur le terminal correspond dans ce cas à un filtrage du profil relatif à la localisation géographique du terminal. En d'autres termes seuls les informations les plus immédiatement pertinentes sont enregistrées sur le terminal.

Dans ces variantes on peut aussi envisager que le traitement d'une requête, décrit plus avant dans la description, soit déportée sur le serveur de profil au lieu d'être effectuée par le terminal, la réponse à la requête étant alors transmise au terminal.

Le processus 102 est donc capable pour toute localisation temporelle et spatiale de produire le profil actif souhaité par l'utilisateur. Ce fonctionnement par agenda permet aussi de devancer les demandes de l'utilisateur. En effet l'agenda permet de faire entrer dans le profil actif des ressources dont l'utilisateur est susceptible d'avoir besoin en fonction d'une localisation.

D'une manière générale le terminal 301 est un dispositif comportant un microprocesseur 303 commandé par des codes instructions enregistrés dans une mémoire 304 de programmes, les éléments 302 à 304 étant interconnectés par un bus 305. Le terminal 301 comporte aussi d'autres composants non représentés en particulier des composants d'entrées / sorties lui permettant de communiquer avec son utilisateur et le ou les réseaux de télécommunications environnants. Lorsque l'on prête une action à un dispositif, cette action est en fait réalisée par un microprocesseur du dispositif commandé par des codes instructions enregistrés dans une mémoire de programme du dispositif.

La mémoire 302 est par exemple structurée en une grille comportant plusieurs zones, une zone pour les données personnelles, une zone pour les données matérielles et une zone pour les données de communications et de services.

Dans la pratique, chaque ressource de communication ou de service est identifiée par un identifiant unique et est décrite par une nature et une localisation de service. Une nature est le type de service correspondant à la ressource, par exemple service SMS, connexion haut débit, service de localisation, service de restauration à domicile, service de renseignement, service de paiement, etc.. Une localisation de service correspond à des informations techniques permettant de se connecter à la ressource. Une telle information est, par exemple, un identifiant permettant de se connecter à la ressource à travers un réseau. Parmi ces identifiants, les plus connus sont les URL et les adresses IP.

Dans l'invention la mémoire 304 comporte donc au moins une zone 304a correspondant à des codes instructions pour la mise à jour des informations d'état des ressources, et une zone 304b qui correspond à des applications dites "écouteur" qui scrute leur environnement et donc celui du terminal 301 pour y découvrir des ressources. Des exemples d'écouteurs sont, par exemple, un écouteur Bluetooth, un écouteur de service SMS, un écouteur de localisation de type GPS, un écouteur de mobilité déterminant le mode de déplacement de l'utilisateur, etc.. La mémoire 304 comporte aussi une zone 304c pour la production et la mise en oeuvre de réseaux virtuels.

La figure 2 illustre l'évolution d'un profil au cours du temps. A un instant t0 un utilisateur met le terminal 301 sous tension. Le terminal 301 lance alors le processus 102 d'exploration. A l'instant t0 le terminal 301 détecte qu'une connexion 201 GPRS (c'est-à-dire une connexion via un réseau de téléphonie mobile de deuxième génération) est possible, que l'utilisateur est piéton 202, qu'il a accès à des services 1.1, 1.2, 2.1 et 3.1.

Les services 1 sont, par exemple, des services de délivrance de SMS, le service 2 est, par exemple, un service de transformation vocale d'un texte, le service 3 est, par exemple, un service de localisation. Comme précédemment décrit, il existe de nombreux autres services.

Le terminal 301 effectue, selon sa programmation, le processus d'exploration à intervalles réguliers m1, m2,..., tant qu'il est sous tension.

A un instant tv1, le terminal détecte que l'utilisateur se déplace maintenant en voiture.

A un instant t3G1 > tv1 le terminal détecte une possibilité de connexion via un réseau de téléphonie mobile de troisième génération.

A un instant tvx1 > t3G1 le terminal détecte que le service 2.1 n'est plus disponible.

A un instant tGPRS1 > tvx1 le terminal détecte que le réseau GPRS n'est plus disponible.

A un instant tv2 > tGPRS1 le terminal détecte que l'utilisateur est de nouveau piéton.

Le processus d'exploration continue ainsi tant que le terminal est sous tension.

Il est ici intéressant de constater que le terminal 301 recense dans le profil 302 actif toutes les ressources disponibles dans l'environnement du terminal, même si cela est redondant d'un point de vue fonctionnalité. Cette caractéristique présente au moins deux avantages :
- une meilleure prise en compte d'une qualité de service demandée par l'utilisateur via ses préférences
- une grande adaptabilité en cas de défaillance d'un service, le terminal étant alors apte à le substituer par un service équivalent.

La figure 1 montre aussi qu'au démarrage le terminal 301 lance un processus 103 de traitement des requêtes de l'utilisateur dudit terminal. Les processus 102 et 103 s'exécutent en parallèle.

Le processus 103 comporte une étape 104 préliminaire d'écoute des requêtes de l'utilisateur. Tant que l'utilisateur n'exprime pas une requête, le processus 103 reste dans l'étape 104. L'utilisateur exprime une requête, par exemple, via un clavier du terminal 301, en sélectionnant un lien sur une page hypertexte, en sélectionnant une option dans un menu ou de toute autre manière.

Par exemple, à une date t1 < tv1, l'utilisateur du téléphone 301 exprime le désir de consulter les SMS, ou autres messages électroniques, qu'il a reçus.

Le terminal 301 passe alors à une étape 105 de production d'un réseau virtuel apte à satisfaire la requête de l'utilisateur. Un tel réseau comporte toutes les ressources requises pour la réalisation de la requête de l'utilisateur. Dans notre exemple le terminal a besoin d'un mode de connexion à un serveur de distribution de SMS. A la date t1, un réseau GPRS est disponible, ainsi que deux serveurs aptes à distribuer des messages SMS.

Dans l'étape 105 le terminal 101 produit donc un réseau virtuel comportant le service 1.1 et la connexion GPRS. Dans l'invention, chaque ressource listée dans le profil est considérée comme un composant réseau et en ce sens comporte une interface de communication standardisée ainsi que des propriétés accessibles aux autres composants et permettant la sélection du composant le plus apte à satisfaire la requête de l'utilisateur.

Une fois le réseau constitué il est mis en oeuvre. Dans notre exemple le terminal 301 utilise donc le réseau GPRS pour se connecter au serveur 1.1 de distribution de SMS et ainsi récupérer les messages de l'utilisateur. L'ensemble des informations nécessaires à cette connexion, à savoir identifiant et mot de passe par exemple, est aussi enregistré dans le profil de l'utilisateur dans la zone correspondant aux informations personnelles.

Dans un autre exemple l'utilisateur souhaite toujours récupérer ses SMS mais à un instant t2 tel que t3G1 < t2 < tvx1. En d'autres termes l'utilisateur souhaite consulter ses messages SMS alors qu'il est en voiture. Dans l'étape 105 le terminal 301 produit un réseau virtuel en prenant en compte le fait que l'utilisateur est dans un véhicule. Le terminal 301 inclut alors dans le réseau virtuel le composant 2.1 permettant de transformer un message texte en message vocal. A la date t2 le terminal 30 a aussi détecté qu'un réseau de téléphonie mobile de troisième génération est disponible. Selon les préférences exprimées par l'utilisateur via son profil, le terminal utilisera alors, soit le réseau de deuxième génération, soit le réseau de troisième génération. Une telle préférence est, par exemple, connexion la moins onéreuse possible, ou connexion la plus rapide possible. Dans notre exemple considérons que l'utilisateur ait choisi de favoriser la rapidité. Dans ce cas le réseau virtuel produit comporte une connexion via le réseau de troisième génération, le service 1.1 et le service 2.1. Le terminal 301 se connecte donc au service 1.1, puis au service 2.1 et peut ainsi diffuser de manière vocale les messages SMS de l'utilisateur qui est en train de conduire son véhicule.

Dans un autre exemple l'utilisateur souhaite toujours récupérer ses SMS mais à un instant t3 tel que tGPRS1 < t3 < tv2. C'est-à-dire que l'utilisateur est toujours en voiture, mais que le service 2.1 n'est plus disponible. Dans ce cas les messages SMS seront déclarés comme indisponibles sauf si l'utilisateur a déclaré comme préférence d'obtenir ses messages SMS quelles que soient les circonstances.

Dans le dernier exemple l'invention prévoit une autre solution en cas d'indisponibilité d'un service. Il se peut qu'un service soit disponible moyennant finance.

La figure 4 montre une étape 401 de test de la disponibilité d'une ressource lors de la production d'un réseau virtuel. Si la ressource est disponible mais pas activable, le terminal 301 passe à une étape 402 qui consiste à tester si la ressource est activable via un abonnement à souscrire. Dans ce cas la ressource a été enregistrée comme telle dans le profil 302. Si ce n'est pas le cas le terminal passe à une étape 403 de fin, il est alors impossible de satisfaire la requête de l'utilisateur.

Si c'est le cas le terminal vérifie alors qu'une ressource de paiement est disponible, via une connexion à un service bancaire par exemple. Si un tel service bancaire est disponible alors le terminal passe à une étape 404 d'abonnement. L'étape 404 consiste à inclure dans le réseau final le service bancaire et le service auquel on souhaite souscrire un abonnement. Il devient dès lors possible de répondre à la requête, la souscription acceptée et initialisée fait passer alors la ressource à l'état activé. Dans ce mode de fonctionnement, l'utilisateur précise dans son profil jusqu'à quelle somme le terminal est autorisé à négocier automatiquement par exemple. Si la somme est dépassée, l'accord de l'utilisateur est sollicité pour continuer à produire le réseau virtuel.

La figure 5 illustre de manière générale le traitement d'une demande. La figure 5 montre une ligne 501 correspondant à une décomposition d'une demande en une séquence de ressources à mettre en oeuvre. L'exemple choisi illustre une demande correspondant à la mise en oeuvre de quatre ressources R1 à R4. Grâce à l'étape 102 le terminal 301 est capable d'associer à chaque ressource R1 à R4 une liste de services. Ces listes sont issues du profil actif de l'utilisateur produit à l'étape 102. A la ressource R1 correspond la liste L1 comportant les services S1.1 à S1.3. A la ressource R2 correspond la liste L2 comportant les services S2.1 à S2.4. A la ressource R3 correspond la liste L3 comportant le service S3.1. A la ressource R4 correspond la liste L4 comportant les services S4.1 à S4.3. Dans l'invention chaque service à un statut parmi au moins, non disponible, disponible, activable et activé. Pour la satisfaction de la demande, le terminal 301 sélectionne un service par liste pour produire le réseau de services permettant la satisfaction de la demande. Dans notre exemple ce réseau comporte les services S1.1, S2.3, S3.1 et S 4.1. Dans la pratique, dans une liste, les services présents correspondent aux préférences de l'utilisateur. Le terminal 301 sélectionne alors, le premier service activé de la liste. Si aucun service n'est activé, alors il sélectionne le premier service activable et il l'active. Si aucun service n'est activable alors le terminal sélectionne le premier service disponible et il l'active. Si aucun service n'est disponible alors le terminal lance une procédure de découverte ou d'abonnement décrite avec la figure 4.

Un service est activé si le terminal peut s'en servir, c'est-à-dire, par exemple, émettre des données via une connexion ouverte à un réseau.

Un service est activable si le terminal dispose de toutes les informations et droits pour l'activer.

Un service est disponible si le terminal le détecte, c'est-à-dire si le terminal capte un réseau de télécommunication mais ne dispose pas des informations nécessaires pour le rendre activable.

Un service est non disponible si aucune activité ne correspondant à ce service n'est détectée.

Dans cette description de gestion d'états d'un service, il faut comprendre service dans un sens large. Un service est donc ici soit une ressource de traitement, de distribution d'information (base de données par exemple), de communication (réseau), ou de restitution (périphérique d'entrée sortie).

Dans l'invention le profil actif est donc une structure enregistrée dans la mémoire 302. Une façon de voir cette structure est de l'imaginer comme une liste de ressources, à chaque ressource correspondant une liste d'offreurs aptes à rendre le service lié à la ressource. Un offreur est ici un dispositif avec lequel le terminal 301 est apte à établir une communication.

Dans une variante de l'invention, la précédente structure associe à chaque offreur une note de qualité de service qui est déterminée lors des mises à jour de l'infosphère de l'utilisateur. Il est ainsi possible de construire un réseau de ressources pour répondre à une requête selon une exigence de qualité de service.

Dans une variante de l'invention le profil 302 est mis à jour en fonction d'un agenda. Un tel agenda fait alors partie des données personnelles de l'utilisateur. Un tel agenda précise par exemple quelles informations doivent être recherchées en fonction de la date. Une date peut alors être précisée à la minute, à l'heure, au jour, ou en considération de toute autre précision.

Dans un exemple un tel agenda précise que le samedi et le dimanche, entre 11h et 13h, le terminal doit inclure dans le profil des informations relatives aux restaurants situés à proximité du terminal. Le terminal constitue alors un réseau virtuel permettant d'obtenir ces informations. Ainsi, lorsque que l'utilisateur exprime une requête pour trouver un restaurant, la réponse est déjà disponible dans le profil 302.

Avec l'invention il devient possible d'exprimer une QoS (qualité de service) au niveau du service. En effet l'invention rend possible la prise en compte d'une préférence telle que : "message SMS quelles que soient les circonstances." Un réseau virtuel sera construit dans ce but ainsi qu'illustré par la mise en oeuvre de la réception de SMS.

D'autre part, chaque composant recensé dans le profil est associé à des notes de disponibilité, fiabilité, délai et capacité de manière à pouvoir déterminer une QoS traditionnelle pour un réseau virtuel et ainsi adapté ce réseau virtuel à une QoS requise par l'utilisateur. Cela est rendu possible grâce à l'invention qui envisage chaque ressource comme un composant connectable à un réseau.

L'invention propose donc la mise en oeuvre d'un processus permanent d'exploration prospective de l'environnement en vue de précéder l'expression d'une requête par un utilisateur. L'invention est particulièrement intéressante car elle amène l'environnement à être tout ce avec quoi le terminal est capable de se connecter, c'est à dire l'infosphère de l'utilisateur. Cela inclut des serveurs, mais aussi des terminaux d'autres utilisateurs. L'invention transforme donc un réseau client serveur traditionnel en un réseau d'utilisateurs opérant tous au même niveau et échangeant des services. Chaque terminal peut être à la fois demandeur (client) et offreur (serveur).

## Revendications

1. Procédé de traitement d'une demande d'un utilisateur d'un terminal (301) mobile par ledit terminal mobile comportant les étapes suivantes mises en oeuvre par le terminal mobile :
- collecte (102) de l'ensemble des données relatives à un utilisateur identifié par un code utilisateur et des moyens d'utiliser ces données constituant l'infosphère de l'utilisateur qui est mise à jour de manière continue, les données collectées étant d'au moins quatre natures : personnelles, ressources de traitements disponibles, ressources de communications disponibles et caractéristiques du terminal,
- production (102) d'un profil actif correspondant à l'utilisateur, résultant de la mise à jour continue de l'infosphère de l'utilisateur et d'un filtrage des informations collectées qui sont associées à des préférences exprimées par l'utilisateur, et enregistrement dudit profil actif dans une mémoire, le profil actif étant utilisé pour produire des réponses à des requêtes exprimées par l'utilisateur, alors que la collecte des données et la production du profil actif sont réalisées en permanence pour tenir compte de l'évolution de l'environnement du terminal,
- expression (104) de la demande par l'utilisateur du terminal,
- décomposition de la demande en une séquence de ressources à mettre en oeuvre en associant à chaque ressource une liste de services, et
- sélection d'un service par liste pour produire un réseau de services permettant la satisfaction de la demande en fonction du profil actif de l'utilisateur qui dépend de la localisation de l'utilisateur, cette localisation étant aussi bien spatiale que temporelle, le procédé étant **caractérisé en ce qu'**il comporte les étapes suivantes : mises en oeuvre par le terminal mobile:
- recherche d'informations en fonction de la date, la date pouvant être précisée à la minute, à l'heure, au jour, ou en considération de toute autre précision, ces informations étant prédéterminées par un agenda faisant partie des données personnelles de l'utilisateur,
- de sorte que lorsque l'utilisateur exprime une demande située dans la date précisée, la réponse est déjà disponible dans le profil actif, et
- mise en oeuvre (106) du réseau de services privé virtuel construit, pour satisfaire la demande exprimée de l'utilisateur.

2. Procédé selon la revendication 1, dans lequel la production du profil est réalisée selon un agenda (302, 307).

3. Procédé selon l'une des revendications 1 ou 2, dans lequel une information de qualité de service est associée dynamiquement à chaque élément du profil de nature ressource de traitement et ressource de communication.

4. Procédé selon la revendication 3, dans lequel le réseau utilisateur privé d'éléments permettant la satisfaction de la demande est construit en fonction d'une qualité minimale à atteindre pour la satisfaction de la demande.

5. Procédé selon l'une des revendications 1 à 4, dans lequel la défaillance d'un élément dans le réseau utilisateur privé construit pour la satisfaction de la demande entraîne la substitution de cet élément par un autre élément équivalent dans le profil.

6. Procédé selon la revendication 5, dans lequel une tâche de production du profil maintient, quand c'est possible et ce pour chaque élément du profil, une liste d'éléments équivalents.

7. Procédé selon l'une des revendications 1 à 6, dans lequel une demande, pour être confrontée aux ressources disponibles, est décomposée en une séquence de ressources à mettre en oeuvre pour satisfaire la demande.

## Claims

1. A method for processing a query of a user of a mobile terminal (301) by said mobile terminal comprising the following steps implemented by the mobile terminal:
- the collection (102) of a set of data relating to a user identified by a user code and means for using this data constituting the user's infosphere, which is continuously updated, with the data collected relating to four different themes: personal data, available processing resources, available communication resources and the terminal's properties,
- the production (102) of an active profile corresponding to the user, resulting from the continuous updating of the user's infosphere and filtering of the information collected, which is associated with preferences expressed by the user, and the recording of said active profile in a memory, the active profile being used to produce responses to queries expressed by the user, where data collection and active profile production operations are performed in a continuous manner to take into account any changes taking place with regard to the terminal's environment,
- the expression (104) of the query by the user of the terminal,
- the breakdown of the query into a sequence of resources that must be implemented by associating each resource with a list of services, and
- the selection of a service per list to produce a network of services for satisfying the query according to the active profile of the user, which depends on the user's location, this location being expressed both in terms of space and time, the method being **characterised in that** it comprises the following steps implemented by the mobile terminal:
- an information search based on the date, the latter capable of being provided to the nearest minute, hour or day, or taking into account any other precision, this information being predetermined by an agenda making up part of the user's personal data,
- in such a way that when the user issues a query at the specific date, the response is already available in the active profile, and
- the implementation (106) of the private virtual service network that has been built, in order to meet the query expressed by the user.

2. A method according to claim 1 wherein the profile is produced according to an agenda (302, 307).

3. A method according to one of claims 1 or 2, wherein service quality information is dynamically associated with each element of the profile relating to processing resources and communication resources.

4. A method according to claim 3, wherein the private user elements network designed for meeting the query is built to satisfy a minimum quality level required for responding to the query.

5. A method according to one of claims 1 to 4, wherein the failure of an element in the private user network built to meet the query causes this element to be substituted by another equivalent element in the profile.

6. A method according to claim 5, wherein a profile production task retains, where possible and for each profile element, a list of equivalent elements.

7. A method according to one of claims 1 to 6, wherein, in order to compare a query with the available resources, this query is broken down into a sequence of resources that must be implemented to meet the query.

## Patentansprüche

1. Verfahren zur Behandlung einer Anfrage eines Benutzers eines mobilen Terminals (301) durch das besagte mobile Terminal, umfassend die folgenden Schritte, die durch das mobile Terminal umgesetzt werden:
- Sammlung (102) der gesamten Daten in Bezug auf einen Benutzer, der durch einen Benutzercode identifiziert wird, und der Mittel zur Verwendung dieser Daten, die die Infosphäre des Benutzers bilden, die permanent aktualisiert wird, wobei sich die gesammelten Daten aus zumindest vier verschiedenen Datentypen zusammensetzen: persönliche Daten, verfügbare Bearbeitungsressourcen, verfügbare Kommunikationsressourcen und Merkmale des Terminals,
- Erzeugen (102) eines dem Benutzer entsprechenden aktiven Profils, das aus der permanenten Aktualisierung der Infosphäre des Benutzers und aus einer Filterung der gesammelten Daten hervorgeht, die den durch den Benutzer ausgedrückten Präferenzen zugeordnet werden, und Ablegen des besagten aktiven Profils in einem Speicher, wobei das aktive Profil verwendet wird, um Antworten auf die vom Benutzer ausgedrückten Anfragen zu erzeugen, wobei die Datensammlung und die Erzeugung des aktiven Profils permanent durchgeführt werden, um die Veränderung des Umfeldes des Terminals zu berücksichtigen,
- Ausdruck (104) der Anfrage durch den Benutzer des Terminals,
- Aufteilung der Anfrage in eine umzusetzende Ressourcensequenz, wobei jeder Ressource eine Serviceliste zugeordnet wird, und
- Auswahl eines Services je Liste zum Erzeugen eines Servicenetzwerkes, das die Befriedigung der Anfrage je nach aktivem Profil des Benutzers ermöglicht, das von der Lokalisierung des Benutzers abhängt, wobei diese Lokalisierung sowohl räumlich, als auch zeitlich erfolgt, und das Verfahren **dadurch gekennzeichnet ist, dass** es die folgenden Schritte umfasst, die vom mobilen Terminal umgesetzt werden:
- Suche nach Informationen je nach dem Datum, wobei das Datum in Minuten, Stunden, Tagen oder unter Annahme anderer Präzisionen ausgedrückt werden kann, und diese Informationen durch einen Terminkalender vorbestimmt werden, der Bestandteil der persönlichen Daten des Benutzers ist,
- sodass die Antwort, wenn der Benutzer eine Anfrage ausgibt, die sich innerhalb des präzisierten Datums befindet, bereits im aktiven Profil verfügbar ist, und
- Anwendung (106) des erzeugten virtuellen privaten Servicenetzwerkes, um die vom Benutzer ausgedrückte Anfrage zu befriedigen.

2. Verfahren nach Anspruch 1, bei dem die Erzeugung des Profils gemäß einem Terminkalender (302, 307) erfolgt.

3. Verfahren nach einem der Ansprüchen 1 oder 2, bei dem eine Information über die Servicequalität dynamisch jedem Element des Profils des Typs Bearbeitungsressource und Kommunikationsressource zugeordnet wird.

4. Verfahren nach Anspruch 3, bei dem das private Benutzernetzwerk mit den Elementen zur Befriedigung der Anfrage in Abhängigkeit von einer Mindestqualität erzeugt wird, die zu erreichen ist, um die Anfrage zu befriedigen.

5. Verfahren nach einem der Ansprüche 1 oder 4, bei dem der Fehler eines Elements im privaten Benutzernetzwerk, das zur Befriedigung der Anfrage erzeugt wurde, zum Ersatz dieses Elements durch ein anderes gleichwertiges Element im Profil führt.

6. Verfahren nach Anspruch 5, bei dem eine Aufgabe zur Erzeugung des Profils, falls dies möglich ist bei jedem Element des Profils, eine Liste mit gleichwertigen Elementen beibehält.

7. Verfahren nach einem der Ansprüche 1 oder 6, bei dem eine Anfrage, um mit den verfügbaren Ressourcen konfrontiert zu werden, in eine Sequenz mit Ressourcen unterteilt wird, die anzuwenden sind, um die Anfrage zu befriedigen.
